# EUROPÄISCHE PATENTSCHRIFT

(11) **EP 2 413 299 B1**
(45) Veröffentlichungstag und Bekanntmachung des Hinweises auf die Patenterteilung: **13.04.2016**
(21) Anmeldenummer: 11175490.9
(22) Anmeldetag: 27.07.2011
(51) Int. Cl.: G08B 25/10, G08B 26/00, H04W 8/00

(54) **Anmeldeverfahren für Funkkommunikationssysteme**
Registration method for wireless communication systems
Procédé d'alerte pour systèmes de communication radio

(30) Priorität: 27.07.2010 DE 102010032369
(43) Veröffentlichungstag der Anmeldung: 01.02.2012
(73) Patentinhaber: Makadmini, Lotfi, 80803 München (DE)
(72) Erfinder: Makadmini, Lotfi, 80803 München (DE)
(74) Vertreter: Weickmann & Weickmann PartmbB

(56) Entgegenhaltungen:
- EP-A2- 0 911 775
- WO-A1-2012/013692
- US-A1- 2008 001 734

## Beschreibung

### I. Anwendungsgebiet

Die Erfindung behandelt ein Anmeldeverfahren für Funkkommunikationssysteme, insbesondere von Gefahrenmeldeanlagen, bei dem Kollisionen verhindert werden.

### II. Technischer Hintergrund

Funk-Gefahrenmeldeanlagen umfassen Meldesensoren, auch Nebenstationen oder allgemein periphere Elemente genannt, die im Fall einer detektierten Gefahr, z.B. Brand, Einbruch, eine Gefahrenmeldung über eine Funkverbindung an eine Gefahrenmeldezentrale, auch Hauptstation oder allgemein Zentrale genannt, übermitteln. Diese leiten dann die Informationen an eine übergeordnete Zentrale wie eine Brandmeldezentrale (BMZ) weiter, in der zur Beseitigung der Gefahr weitere Maßnahmen, z.B. einer Alarmierung der Feuerwehr bzw. der Polizei, eingeleitet wird. Die Meldesensoren umfassen dabei in der Regel eine Sende- und eine Empfangseinrichtung und sollen für einen Einsatz an unzulänglichen Orten möglichst autark, d.h. mit einer Batterie und nicht durch einen Kabelanschluss an einem Stromnetz betrieben werden.

Aus EP 0 911 775 ist beispielsweise ein Gefahrenmeldesystem und ein Verfahren zur Funkübertragung in einem solchen System bekannt, welches bidirektional aufgebaut ist.

Im Gegensatz zu herkömmlichen Anlagen aus dem Konsumenten-Bereich, bei denen Kommunikationsstörungen einfach hingenommen werden, sind diese bei Gefahrenmeldeanlagen und anderen sensiblen Systemen äußerst unerwünscht.

Eine bedeutende Ursache der Störungen ist die Kollision mit anderen fremden Funksignalen von anderen Systemen, die im gleichen Band/Kanal senden.

Obwohl man sich zu Beginn der Installation des Systems einen freien Basisfrequenzkanal zu finden, kann es oft passieren, dass Monate oder Jahre danach im Laufe einer langen Lebensdauer, ein oder mehrere neue Systeme auf den gleichen Frequenzkanal zurückgreifen. Dabei muss der Frequenzkanal nicht voll belegt sein: Es reicht, wenn das Rauschniveau durch benachbarte Funksignale/Störer erhöht wird.

Die meisten preiswerten Funksysteme haben einen festen Frequenzkanal im 433 oder 868 MHz und kommunizieren dort, egal ob dieser Frequenzkanal schon belegt oder nicht. Erschwerend kommt hinzu, dass die Bandbreite dieser Systeme nicht schmal, (also nicht 12,5, 25 oder 50 kHz) sondern meistens zwischen 500 und 600 kHz beträgt. D.h. es ist nicht ein einziger 25 kHz Kanal, der belegt ist, sondern gleich 20 oder 25 Kanäle. Befinden sich 10 oder 20 Funksysteme in direkter Nachbarschaft einer Funkgefahrenmeldeanlage, so hat diese fast keine Chance reibungsfrei zu funktionieren, auch wenn diese zahlreichen Störer einen Duty Cycle einhalten müssen. Der Duty Cycle reicht bei weitem nicht aus, um Kollisionen zu verhindern.

Ein hochwertiges Funksystem in einer Gefahrenmeldeanlage muss die Fähigkeit haben, mehrfach in der Frequenz weit weg zu springen, um diesen Störungen aus dem Weg zu gehen.

Die meisten Störsysteme sind selbst auch dauerhaft und fest installiert. Die Haupt- und Nebenstation müssen daher ständig, also alle 32 Sekunden, auf andere freie Frequenzen springen, um eine einwandfreie Kommunikation zu gewährleisten. Dies geht auf Kosten des Stromverbrauchs. Die Lebensdauer sinkt dadurch rapide und beträgt statt 5 bis 10 Jahre, höchstens 1 bis 2 Jahre.

Störsignale und fremde Funksignale verursachen ein weiteres ernsthaftes Problem. Bei der Anmeldung fabrikneuer Nebenstationen an der Hauptstation, müssen die Nebenstationen bisher entweder manuell auf einen bestimmten Frequenzkanal eingestellt werden oder sie senden zum ersten Mal auf den so genannten Servicefrequenzkanal. Dieser Servicefrequenzkanal hat für alle Anlagen immer die gleiche feste Frequenz. Ist diese Frequenz am Einsatzort von einem anderen fremden System belegt, oder wird sie gestört, so ist eine Installation nicht möglich. Ist das Rauschniveau beim Servicefrequenzkanal durch einen Nachbarstörer oder Funkstörer zu hoch, was relativ oft vorkommt, so ist eine Installation entweder nicht möglich oder die Reichweite bei der Installation ist sehr gering.

In der Regel wird nicht eine einzige Hauptstation mit den dazugehörigen mehreren Nebenstationen installiert, sondern mehrere Hauptstationen am selben Gebäude/Anlage/Ort installiert. Typischerweise hat z.B. bei einer Brandmeldeanlage jede Hauptstation bis zu 32 Nebenstationen. In dem oben beschriebenen System können typischerweise bis zu 40 Hauptstationen in direkter Nachbarschaft aktiv sein. Die Hauptstationen können an eine gemeinsame übergeordnet Zentrale, wie eine Brandmeldezentrale (BMZ), angeschlossen sein.

Jede der 40 Hauptstationen nimmt einen von den 40 Basisfrequenzkanälen, falls dieser Kanal frei ist. Die 40 Basiskanäle und ihre jeweils typischen 7 Alternativkanäle sind nach einem bestimmten Algorithmus so gewählt, dass sie sich im "Worst Case" unter keinen Umständen nähern oder gar stören.

Der "Worst Case" bedeutet hier, dass alle 40 Hauptstationen sieben Mal auf die Alternativkanäle springen müssen. Nicht nur die 40 Kanäle sind einzig, sondern auch jeweils die 7 Alternativkanäle.

Würde eine neue Hauptstation im SCAN Modus, d. h, im Suchmodus, alle 40 Kanäle mit allen 7 alternativen Frequenzkanälen, Spiegelfrequenz und Intermodulationsfrequenzen durchsuchen, so würde das Scannen (Suchen) Stunden dauern, obwohl zwei oder mehr Empfänger parallel aktiv sind. Kein Installateur, der die Inbetriebnahme einer Anlage durchführt, würde solange warten wollen oder können.

In diesem Zusammenhang ist aus der US 2008/0001734 A1 ein drahtlos arbeitendes Sicherheits-Netzwerk bekannt, welches in einem Gebäude zur Überwachung der Zugänge eingesetzt werden kann.

Dieses Sicherheits-Netzwerk umfasst eine Hauptstation und mehrere damit verbundenen Nebenstationen in Form von Meldern, die das Öffnen einer Tür oder eines Fensters an die Hauptstation melden.

### III. Darstellung der Erfindung

### a) Technische Aufgabe

Der Erfindung liegt die Aufgabe zu Grunde, ein Installationsverfahren von Funkkommunikationssystemen und ein hierfür ausgelegtes Kommunikationssystem bereitzustellen, bei dem eine zuverlässige Anmeldung der einzelnen Teilnehmer des Funkkommunikationssystems sichergestellt ist.

### b) Lösung der Aufgabe

Die Aufgabe wird erfindungsgemäß durch die kennzeichnenden Merkmalen der unabhängigen Patenansprüche gelöst. Besonders vorteilhafte Ausgestaltungen gehen aus den Unteransprüchen in Verbindung mit der Beschreibung und den Zeichnungen hervor.

Die Erfindung behandelt ein Verfahren zur Installation einer Gefahrenmeldeanlage. Letzteres weist mindestens eine Hauptstation und eine oder mehrere Nebenstationen auf, wobei zwischen einer Hauptstation und dieser zugeordgeordneten Nebenstationen eine Kommunikation mittels Funkübertragung erfolgt. Die Kommunikation wird in mindestens einem bestimmten Frequenzbereich durchgeführt wird, zumindest, wenn sich die Gefahrenmeldeanlage im Normalbetriebsmodus befindet, der auf den Anmeldemodus folgt und in dem die Gefahrenmeldeanlage die für sie vorgesehene Funktion ausführt.

Bevor eine erste Hauptstation nach dem erstmaligen Einschalten in den Anmeldemodus geht, sendet sie ein Anwesenheitssignal an alle weiteren Hauptstationen, die sowohl Teil derselben Gefahrmeldeanlage sowie einer anderen sein können. Das Anwesenheitssignal beinhaltet zwei Anfragen an die anderen Hauptstationen:
- Bekanntmachung aller Hauptstationen, die sich im Anmeldemodus befinden, in dem die Nebenstationen bei der Hauptstation angemeldet werden. Dies können die anderen Hauptstationen durch ein Anmeldemodus-Signal machen.
- Bekanntmachung aller Hauptstationen im Normalbetriebsmodus. Diese Hauptstationen sollen außerdem der ersten Hauptstation mitteilen, welche Frequenzbereiche diese für die Kommunikation belegt haben.

Die erste Hauptstation wartet nun solange, bis keine weitere Hauptstation mehr den Anmeldemodus meldet. Die erste Hauptstation wählt danach mindestens einen Frequenzbereich, der noch frei und ungestört ist. Die erste Hauptstation wechselt dann in den Anmeldemodus und gibt diesen in einem Anmeldemodus-Signal, das entweder zeitlich lang ist oder periodisch wiederkehrend, allen anderen Hauptstationen bekannt gibt.

Im Anschluss können sich nun die Nebenstationen an der ersten Hauptstation anmelden. In einem weiteren Aspekt behandelt die Erfindung also ein Verfahren zur Installation eines Gefahrenmeldersystems, aufweisend eine Hauptstation und mehrere Nebenstationen, zwischen denen eine Kommunikation mittels Funkübertragung erfolgt, wobei die Kommunikation zwischen den Nebenstationen und einer Hauptstation zur Anmeldung der Nebenstationen an die Hauptstation auf einem vorbestimmten Servicefrequenzkanal durchgeführt wird.

Bei dem Verfahren weist die Hauptstation und die Nebenstationen mehrere voreingestellte Servicefrequenzkanäle auf, die vorzugsweise auf dem Frequenzband möglichst weit auseinander liegen. Die Hauptstation überprüft nun die Servicefrequenzkanäle und wählt den Servicefrequenzkanal aus, der am wenigsten gestört ist. Die Hauptstation sendet nun ein Anmeldesignal, das entweder zeitlich lang ist oder periodisch wiederkehrend, auf dem ausgewählten Servicefrequenzkanal an alle Nebenstationen aus. Das Anmeldesignal kann dabei dem Anmeldemodus-Signal entsprechen.

Bei einem Servicefrequenzkanal handelt es sich vorzugsweise um einen Frequenzkanal, der in der Hauptstation so wie in den Nebenstationen vor Inbetriebnahme voreingestellt ist. Auf dem Servicefrequenzkanal erfolgt die für ein Anmeldeverfahren der Nebenstationen an einer Hauptstation notwendige Kommunikation.

Eine Anmeldung der Nebenstationen an die Hauptstation kann nun auf dem von der Hauptstation ausgewählten Servicefrequenzkanal durchgeführt werden. Diese kann alle für den späteren Normalbetriebsmodus nötigen Informationen für die Nebenstationen enthalten, wie die Basiskanäle, in den gesendet wird, deren Alternativ- (Nachbar) Kanäle, Adressen, Zeitvorgaben für Informationssignale wie Routinesignale und die Frequenzbereiche, in denen sich die Kanäle befinden.

Es besteht nun die Möglichkeit, dass im Normalbetriebsmodus ein Signal zwischen zwei Stationen, bzw. Teilnehmern des Kommunikationssystems nicht korrekt übermittelt wurde. In diesem Fall wird vorgeschlagen, dass beide Stationen, d. h. z.B. Haupt- wie Nebenstation, diesen Zustand dadurch erkennen, dass die eine Station das Routinesignal nicht erhalten und die andere Station in dem empfangenen parallelen Routinesignal keine Quittung erhalten hat.

Daraufhin können die Hauptstation und die jeweilige Nebenstation auf einen anderen Kanal innerhalb des Frequenzbereichs wechseln, in welchem das Routinesignal nicht übermittelt werden konnte. Dabei ist es insbesondere vorteilhaft, wenn der andere Kanal ein benachbarter Frequenzkanal zu dem zuvor gewählten ist. Somit wird vorzugsweise also lediglich eine Veränderung um wenige Kilohertz angestrebt. Vorteilhafterweise kann weiterhin die Hauptstation in einem s. g. "Broadcast"-Signal, welches ein Signal ist, das an alle Nebenstationen gerichtet ist, mitteilen, dass der betreffende gestörte Frequenzkanal geändert wurde. Im weiteren Routineprüfungsverfahren wird dann also vorzugsweise immer der neue gewählte Frequenzkanal benutzt.

Falls nach einem solchen Frequenzwechsel immer noch eine Störung auftritt, so kann ein weiterer Frequenzwechsel erfolgen. Vorteilhafterweise wird ein solcher Frequenzkanalwechsel maximal 5-7 mal durchgeführt.

Wenn nun trotz einer solchen vorbestimmten Anzahl an Frequenzkanalwechseln eine zuverlässige Übertragung nicht sichergestellt werden kann, wird das gesamte Frequenzspektrum nach einem neuen Frequenzbereich abgesucht, der möglichst unverrauscht ist und/oder von keinem anderen Kommunikationsmitteln genutzt wird. Während dieser Suche wird jedoch vorzugsweise die Kommunikation zwischen Hauptstation und Nebenstationen fortgesetzt.

Denkbar ist dabei beispielsweise, dass die Hauptstation eine Sende/Empfangseinheit (einen Transceiver) dazu verwendet, um das gesamte Frequenzspektrum nach einem neuen Frequenzbereich abzusuchen, während eine weitere Sende/Empfangseinheit die Kommunikation mit den Nebenstationen übernimmt. Falls also die Hauptstation lediglich zwei Sende/Empfangseinheiten aufweist, so kann beispielsweise eine Kommunikation mit den Nebenstationen über den aus dem Stand der Technik bekannten Quittungsbetrieb erfolgen. Wenn die Hauptstation nun einen neuen Frequenzbereich für den gestörten ermittelt hat, so gibt diese vorzugsweise in einer Nachricht an alle Nebenstationen einen Zeitpunkt und den Frequenzbereich bekannt, zu welchem gewechselt werden soll.

Für eine Identifikation einer Nebenstation oder der Hauptstation weist deren Routinesignal vorzugsweise am Anfang einen individuellen Erkennungsimpuls auf, welcher durch einen eindeutigen Amplituden- und/oder Frequenzverlauf gekennzeichnet sein kann.

Vorzugsweise folgt daraufhin ein Impuls, der der Korrektur der Resonanzkurve einer Antenne der Hauptstation oder einer Nebenstation dient.

Vorzugsweise erfolgt hierauf wiederum im Routinesignal der Hauptstation ein Impuls, der der Synchronisation der Nebenstationen dient. Die gerade zeitgleich sendende Nebenstation kann also beim Empfang dieses Synchronisationsimpulses die ihr zugeordnete Uhr an die der Hauptstation zugeordneten Uhr sowohl zeitlich, als auch frequenzmäßig anpassen.

In einem weiteren Aspekt behandelt die Erfindung ein Verfahren zur Installation der Gefahrenmeldeanlage. In diesem konkreten Zusammenhang wird unter Installation insbesondere der tatsächliche Einbau der Nebenstationen und mindestens einen Hauptstation in das betreffende Gebäude verstanden, wobei auch die Vorbereitung der Nebenstationen und der mindestens einen Hauptstation vom Verfahren miteingeschlossen werden. Durch das Verfahren kann die Installation vereinfacht werden und die dafür benötigte Zeit verkürzt werden. Das sich das hier thematisierte Verfahren in erster Linie auf den Zeitraum vor dem ersten Einschalten der eingebauten Gefahrenmeldeanlage bezieht, kann es vollkommen unabhängig von den anderen in der Erfindung behandelten Verfahren eingesetzt werden.

### Problemstellung:

In zahlreichen Anlagen werden die Melder zuerst an den jeweiligen Positionen/Plätzen in der Bauphase installiert. Wochen später, wenn die Bauphase vollständig beendet ist, kommt die Gefahrenmeldezentrale hinzu und wird im Keller oder in einem speziellen Abstellraum in Betrieb genommen.

Würden die Melder wochenlang ständig nach der Zentrale suchen, so wird ihr Energieverbrauch sehr hoch sein und ihre Batterien gingen rasch zur Neige. Würde man stattdessen die Melder erst nach der Bauphase montieren und an der Zentrale dann anmelden, so würde der Betrieb im Gebäude durch die Anwesenheit der Installateure teilweise gestört. Die meisten Kunden/Gebäudebetreiber sind gegen diese Störungen und wollen sie meiden. Nach einer Lösung wird gesucht.

### Problemlösung:

Um das beschriebene Problem zu lösen, wird die gesamte Anmeldung aller Melder an den jeweiligen Gefahrenmeldezentralen in der Fertigung durchgeführt. Danach wird wieder alles ausgeschaltet. Nach dem Wieder - Einschalten der Nebenstationen und der jeweiligen Gefahrenmeldezentralen im Installationsfeld, d.h. in dem Gebäude (oder den Gebäuden), für das die Gefahrenmeldeanlage vorgesehen ist, finden und/oder erkennen sich die Gefahrenmeldezentrale und alle Melder wieder. Es beginnt also sofort der normale Betriebsmodus.

Damit dies auch gelingt, muss man folgendes neues Verfahren zur Installation einer Gefahrenmeldeanlage in dieser Schrittfolge oder einer anderen anwenden, wobei einzelne Schritte oder Teile dieser Schritte auch weggelassen werden können:
Das Installationsfeld, indem die Gefahrenmeldeanlage, aufweisend eine Zentrale, d.h. eine Gefahrenmeldezentralen und einen oder mehrere Melder, installiert wird, in vielen Fällen noch Baustellen, wird nach Störfrequenzen durchsucht. Daraus werden die idealen freien Frequenzkanäle ermittelt, in denen später die Gefahrenmeldezentrale samt Melder arbeiten soll. Dabei soll möglichst nicht nur der Basisfrequenzkanal frei und rauscharm sein, sondern alle dazugehörigen Alternativkanäle, typisch 7, alle Spiegelfrequenzen sollten frei und rauscharm sein. Zuletzt sollte die Intermodulation, die Summen und Produkte zweiter und dritter Ordnung, für den neuen Basiskanal darauf untersucht werden, ob von dort Störungsgefahr droht.

Mithilfe eines extra entwickelten Messgerätes sollte die Feldstärken und die Kommunikationsqualität an den vorgesehenen Melderpositionen ermittelt werden. Nur wenn die Feldstärke, inklusive Reserve, (typisch 50 dB) in einem vorgegeben Wertebereich liegt, sollte die Funkinstallation freigegeben werden. Mit dem erfindungsgemäßen Funksystem gelingt dies auch in den aller meisten Fällen.

Die komplette Anmeldung der Melder an der zukünftigen Gefahrenmeldezentrale wird nun mit dem ausgewählten Basiskanal und vorzugsweise den dazugehörigen Alternativfrequenzkanälen in der Fertigung durchgeführt. Die Melder und die Zentrale befinden sich danach vorzugsweise in dem Betriebsmodus und/oder die Melder und die Zentrale erfüllen alle Voraussetzungen, um in den Betriebsmodus wechseln zu können.

Anschließend werden alle Melder in den so genannten Schlafmodus vorzugsweise per Funknachricht seitens der Gefahrenmeldezentrale versetzt. Die Zentrale selbst wird danach möglichst ausgeschaltet, bis sie in den nächsten Wochen an ihren endgültigen Einsatzort transportiert wird.

Die Melder können im Regelfall unmittelbar oder später nach der erfolgreichen Anmeldung bei der Zentrale und anschließenden Wechsel in den Schlafmodus, zum endgültigen Einsatzort gebracht werden, im Regelfall eine nahezu fertige Baustelle.

Im Schlafmodus wachen die Melder periodisch auf (typisch eine Stunde) für eine kurze, vorzugsweise programmierte Zeit (typisch 30 Sekunden) und suchen nach dem Aufwecksignal der Zentrale. Die Zentrale sendet ihren Ruf-/Aufwecksignal. Die Melder bleiben, wenn sie das Aufwecksignal der Zentrale gefunden haben, auf und die Funkkommunikation zwischen den Meldern und der Zentrale geht in den Betriebsmodus über. Andernfalls, wenn die Melder kein Aufwecksignal gefunden haben, gehen die Melder vorzugsweise nach der kurzen, vorzugsweise programmierten Zeit, typisch 30 Sekunden, wieder in den Schlafmodus zurück.

Damit die Aufwachphase möglichst schnell läuft, so bald der Weckruf der Gefahrenmeldezentrale eintrifft, sendet vorzugsweise jeder Melder, der den Weckruf schon mal gehört hat, den Weckruf weiter und zwar vorzugsweise genau in dem für diesen Melder eindeutigen und exklusiven bereits in der Anmeldung reservierten Zeitschlitz der Nachbarschaftshilfe. So kann der Weckruf alle Melder schneller erreichen, ohne dabei eine Kollision zu verursachen. Die Zentrale wiederholt vorzugsweise das Senden des Weckrufs so lange, bis der letzte Melder sich ordnungsgemäß wieder gemeldet hat und in den Betriebsmodus zurückkommt. Dank dieses Verfahrens dauert die Aufweckphase Sekunden.

Die komplette Anmeldung und Zeitschlitzreservierung für jeden Melder wurde möglichst bereits in der Fertigung durchgeführt. Wenn die Melder auf dem Feld aufwachen, dann tun sie dies vorzugsweise nicht willkürlich und ungeordnet, sondern zu vorher bestimmten und fest reservierten Zeitpunkten.

Der Weckruf der Zentrale sollte nicht mit einem anderen Störhochfrequenzsignal verwechselt werden. Das Weckrufsignal ist vorzugsweise sowohl im Amplituden- als auch im Frequenzverlauf eindeutig. Zudem läuft der Weckruf vorzugsweise gemäß dem Voll-Duplex-Verfahren auf zwei Frequenzbändern, typisch auf 433 und 868 MHz.

Schließlich betrifft die Erfindung auch ein Gefahrenmeldesystem, aufweisend mindestens eine Hauptstation und mindestens eine Nebenstation mit einem Zustandsmelder, wobei die Hauptstation und die Nebenstation zur Funkkommunikation ausgebildet sind. Dabei sind die Nebenstation und die Hauptstation voll-duplexfähig. Das bedeutet, dass beide gleichzeitig senden und empfangen können.

Hierfür weisen sie vorzugsweise zwei halb-duplexfähige Transceiver auf, welche also entweder senden oder empfangen können. Die Transceiver können also umschalten zwischen Senden und Empfangen.

Das Gefahrenmeldesystem ist vorzugsweise zum Ausführen des oben beschriebenen Verfahrens ausgelegt.

Das Gefahrenmeldesystem kann Teil einer übergeordneten, zentralen Gefahrenmeldeanlage sein. Letztere kann eine übergeordnete Zentrale, wie beispielsweise eine Randmeldezentrale, aufweisen und mindestens ein Gefahrenmeldesystem. Für eine Kommunikation zwischen dem Gefahrenmeldesystem und der übergeordneten Zentrale wird vorzugsweise ein Festleiter, wie beispielsweise eine serielle Schnittstelle, verwendet.

### c) Ausführungsbeispiele

Weitere Merkmale, Vorteile und Eigenschaften der vorliegenden Erfindung sollen nunmehr anhand der beigefügten Zeichnungen sowie der detaillierten Erläuterung eines Ausführungsbeispiels näher erläutert werden. Dabei zeigen:

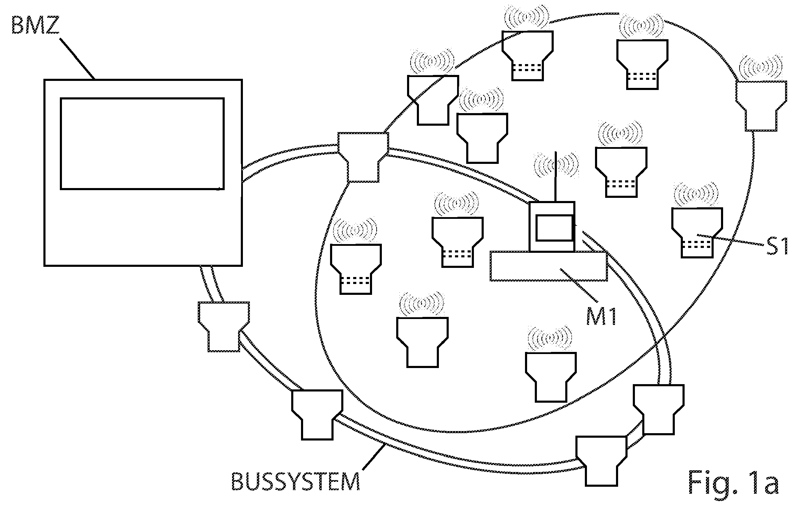

- Fig.1a: eine prinzipielle Anordnung des erfindungsgemäßen Kommunikationssystems in einem ersten Ausführungsbeispiel, und

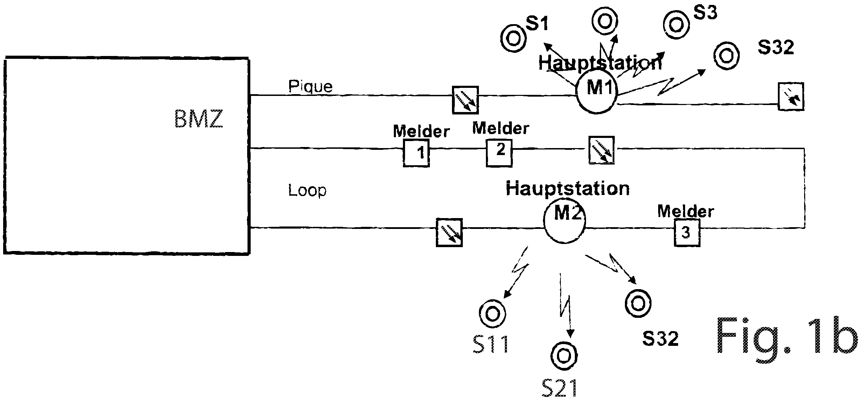

- Fig.1b: eine prinzipielle Anordnung des erfindungsgemäßen Kommunikationssystems in einem zweiten Ausführungsbeispiel.

Das erfindungsgemäße Kommunikationssystem, das insbesondere eine Brand- oder Gefahrenmeldeanlage sein kann, weist wie in Fig.1a oder Fig.1b dargestellt mindestens eine Hauptstation (Master) M1 auf. Diese ist an eine übergeordnete Zentrale BMZ der Gefahrenmeldeanlage, beispielsweise eine Brandmeldezentrale angeschlossen. An die Hauptstation M1 ist wiederum mindestens eine Nebenstation (Slave) S1 - Sn angeschlossen. Dabei ist denkbar, dass es sich bei dem Kommunikationssystem um ein Hybridsystem handelt, bei dem ein Teil 1,2,3 (Fig.1 b) der Zustandsmelder bzw. Nebenstationen drahtgebunden ist und ein Teil S1, S3 drahtlos, d.h. dass es Funkmelder sind. Zwischen den drahtgebundenen Zustandsmeldern und der Hauptstation kann dann ebenfalls das erfindungsgemäße Anmeldeverfahren angewandt werden oder ein separates. Die Gesamtvorrichtung bildet also eine zentrale Gefahrenmeldeanlage und eine Vorrichtung bestehend aus einer Hauptstation M1 und den daran angeschlossenen Nebenstationen S1-Sn ein Gefahrenmeldesystem.

Zwischen Haupt- und Nebenstation wird im Normalbetriebsmodus periodisch eine Integritätsprüfung durchgeführt, für die ein so genanntes erstes und zweites Routinesignal zwischen Haupt- und Nebenstation in einem periodischen Abstand, beispielsweise alle 32 Sekunde, ausgetauscht werden. Die Nebenstation weist einen Sensor auf oder ist mit einem solchen verbunden, dessen Messungen über eine Funkschnittstelle an die Hauptstation geleitet werden. Diese wertet die Funksignale der Nebenstation aus und sendet diese über eine weitere Schnittstelle (Funk und/oder Festleiter) an die übergeordnete Zentrale, wenn notwendig, beispielsweise bei einer kritischen Messung eines Sensors.

Bei der Anmeldung fabrikneuer Nebenstationen an der Hauptstation M, müssen die Nebenstationen bisher entweder manuell auf einen bestimmten Frequenzkanal eingestellt werden oder sie senden zum ersten Mal auf den so genannten Servicefrequenzkanal. Dieser Servicefrequenzkanal hat für alle Anlagen immer die gleiche feste Frequenz. Ist diese Frequenz am Einsatzort von einem anderen fremden System belegt, oder wird sie gestört, so ist eine Installation nicht möglich.

Die Hauptstation scannt eine bestimmte Anzahl von Service Kanälen, typischerweise vier. Diese Servicekanäle wurden vorher vom System festgelegt. Diese Servicekanäle sind bei der Kalibrierung in der Fertigung jeder Haupt- und Nebenstation bekannt. Die Servicekanäle sind auf das ganze Frequenzband bzw. die Frequenzbänder so verteilt, dass die Wahrscheinlichkeit, dass alle auf einmal belegt oder gestört sind, extrem niedrig ist. Beim ersten Einsatz, also während der Anmeldung, scannt die Hauptstation alle Servicekanäle und wählt den besten freien Servicekanal, der am wenigsten Rauschen hat.

Beim ersten Einsatz, also während der Anmeldung, scannt die Nebenstation, alle Servicekanäle bis sie den Kanal findet, den die Hauptstation ausgewählt hat. In diesem Kanal sendet die Hauptstation während der ersten Anmeldung, die s. g. Anmeldenachrichten. Dort erfolgt auch die Anmeldung.

In der Regel wird jedoch nicht eine einzige Hauptstation mit den dazugehörigen mehreren Nebenstationen installiert, sondern mehrere Hauptstationen am selben Gebäude/Anlage/Ort installiert.

Im SCAN MODUS (Suchmodus) ist die aktive scannende (suchende) Hauptstation M1 im Receiver Modus (Empfangsmodus) und empfängt mit ihren beiden oder mehr Empfängern auf der Suche nach einem von 40 freien Kanälen (wie oben beschrieben). Nach dem Verfahren macht die Hauptstation M1 mehr als lediglich Empfangen.

Die Hauptstation sendet ein so genanntes "Anwesenheitssignal" und bittet jede anwesende Hauptstation, sich bei ihr zu melden. Alle bereits vorhandenen Hauptstationen nehmen Kontakt zur den bereits vorhandenen Hauptstationen auf. Dies erleichtert und beschleunigt immens die Suche nach freien Kanälen und vermeidet die Belegung der bereits reservierten Basiskanäle. Vor allem Hauptstationen, die eine einzige Nebenstation haben, melden sich sehr kurz an (ein paar ms). Es ist daher schwer, diese zuverlässig zu detektieren, wenn man nicht lange genug wartet.

Dieses Verfahren hat einen weiteren Vorteil: Befinden sich mehrere Hauptstationen M1, M2, Mn im Anmeldemodus, kann eine neue aus der Fertigung kommende Nebenstation zunächst nicht wissen, bei welcher Hauptstation sie sich nun zum ersten Mal melden soll.

Es ist deshalb streng verboten, dass sich mehr als eine Hauptstation im Anmeldemodus befindet. Trotzdem, kann man auf dem Feld dies nie ausschließen. Es muss nicht immer unbedingt der Fehler des Installateurs sein. Bei einer Reichweite von mehreren hundert Metern innerhalb von Gebäuden (mehrere Kilometer im freien Feld), kann es beispielsweise leicht passieren, dass zwei oder mehrere Installateure, die voneinander nichts wissen, Gefahrenmeldeanlagen zum gleichen Zeitpunkt installieren wollen und somit beide sich im Anmeldemodus befinden. In diesem Fall kann es möglich sein, dass sich eine neue, aus der Fertigung kommende Nebenstation bei der falschen Hauptstation und somit bei der falschen Gefahrenmeldeanlage meldet.

Dank des s. g. Anwesenheitssignals, erkennt eine Hauptstation M1, dass sie sie nicht alleine im Anmeldemodus befindet, sondern eine oder mehrere andere Hauptstationen sich auch im Anmeldemodus befinden. Daraufhin meldet die Hauptstation dies der übergeordneten Gefahrenmeldeanlage und weigert die Fortsetzung des Anmelde-Modus um schlimmeres zu verhindern.

Die Erfindung ist in keiner Weise auf eine Gefahrenmeldanlage beschränkt. Es ist offensichtlich, dass die vorteilhafte erfindungsgemäße Kommunikation in allen Bereichen der Funk-Kommunikation erfolgen kann, beispielsweise in der Satellitenkommunikation, in der Verkehrsüberwachung, Verkehrsleittechnik, oder auch in jeder Form der Sensorüberwachung, bei der mit Hilfe von mindestens einem Sensor eine Vorrichtung überwacht wird, wobei die Messungen des Sensors einer Zentrale zur Weiterverarbeitung übermittelt werden. Letztere Ausführungsform ist beispielsweise, in Flugzeugen oder Industrie/Fertigungsanlagen denkbar.

### Weiterer Aspekt der Erfindung: Verbesserung der Basiskanalsuche

### Problemstellung:

Im Gegensatz zu herkömmlichen Anlagen aus dem Konsumenten-Bereich, bei denen Kommunikationsstörungen einfach hingenommen werden, sind diese bei Gefahrenmeldeanlagen und anderen sensiblen Systemen äußerst unerwünscht.

Eine bedeutende Ursache der Störungen ist die Kollision mit anderen fremden Funksignalen von anderen Systemen, die im gleichen Band/Kanal senden.

Obwohl man sich zu Beginn der Installation des Systems einen freien Basisfrequenzkanal zu finden, kann es oft passieren, dass Monate oder Jahre danach im Laufe einer langen Lebensdauer, ein oder mehrere neue Systeme auf den gleichen Frequenzkanal zurückgreifen. Dabei muss der Frequenzkanal nicht voll belegt sein: Es reicht, wenn das Rauschniveau durch benachbarte Funksignale/Störer erhöht wird.

### Problemlösung:

Um das beschriebene Problem zu lösen, erkennt die Hauptstation während des normalen Betriebs, dass sie zu oft einen Kanalwechsel durchführt. Sie kann nunmehr die routinemäßige Kommunikation auf den funktionsfähigen Kanal im nicht gestörten Frequenzbereich beschränken. Beispielsweise ist denkbar, dass eine Kommunikation über den aus dem Stand der Technik bekannten Quittungsbetrieb erfolgt, für den lediglich ein halbduplex - fähiger Transceiver notwendig ist. Somit ist der andere Transceiver der Hauptstation ungenutzt und kann für eine breitbandige Frequenzsuche genutzt werden, bei der ein neuer, ungestörter Frequenzbereich gefunden werden soll.

Im Hintergrund führt die Hauptstation also mit dem zweiten doppelten Empfänger, d.h. mit dem zweiten Transceiver, einen ausführlichen SCAN durch, auf der Suche nach einem neuen freien und rauscharmen Frequenzkanal. Ist ein neuer freier Frequenzkanal gefunden, so alarmiert die Hauptstation all ihre Nebenstationen, dass zum Zeitpunkt x die Kanalfrequenz gewechselt wird und dass ab dem Zeitpunkt x nur dort kommuniziert wird.

Zum anderen wird nicht nur nach einem neuen freien und rauscharmen Basisfrequenzkanal gesucht, sondern es wird auch vorausgesetzt, dass die Spiegelfrequenz des neuen Basisfrequenzkanals frei ist. Auch die dazugehörigen Alternativkanäle (5 bis 7 Alternativkanäle) müssen freie und rauschfreie Frequenzen aufweisen. Zuletzt wird die Intermodulation, die Summen und Produkte zweiter und dritter Ordnung, für den neuen Basiskanal untersucht, ob von dort Störungsgefahr droht.

Es wird nicht sofort auf den neuen Basisfrequenzkanal gewechselt. Erst nach ein paar Tagen, wenn sicher ist, dass es sich hier um einen dauerhaften Störer handelt, entscheidet sich die Hauptstation für den Basiskanalwechsel. Die Hauptstation speichert diese Vorgänge, um die Störer nach Häufigkeit und nach genau periodischem zeitlichem Auftreten zu sortieren und zu dokumentieren.

### Weiterer Aspekt der Erfindung: Selektionsverfahren zum schnellen Erkennen des eigenen HF-Signals in einem synchronen Funksystem einer Funk-Gefahrenmeldeanlage

### Problemstellung

Im Gegensatz zu herkömmlichen Anlagen aus dem Konsumenten-Bereich, bei denen Kommunikationsstörungen einfach hingenommen werden, sind diese bei Gefahrenmeldeanlagen und anderen sensiblen Systemen äußerst unerwünscht. Synchronisationsprobleme und s. g. Fading-Löcher sind oftmals die Hauptursachen bei Kommunikationsstörungen.

Um Störungen zu vermeiden ist ungemein wichtig, neue Synchronisationsverfahren zu entwickeln und Fading-Löcher zu vermeiden.

Die mit Abstand wichtigste Maßnahme gegen Störungen ist die Maximierung der Empfangsempfindlichkeiten von Hauptstation M und der Nebenstationen.

Ein System, das im LINK BUDGET eine Reserve von 40 bis 50 dB hat, reagiert weniger empfindlich auf Störungen, als ein System mit geringerer Reserve. Anders ausgedrückt: Wenn die Reichweite des Systems 1000 Meter beträgt und man würde Haupt- und Nebenstation mit höchstens 100 Meter Abstand installieren, dann ist die Signalstärke deutlich höher als bei einem Abstand von 1000 Meter. So ein System ist schwerer zu stören, weil es noch über eine große Reserve verfügt. Würde man die gleiche Reserve von 40 bis 50 dB auf Systeme anwenden, die nur eine Empfindlichkeit von maximal -105 dBm aufweisen, würde sich die Reichweite zwischen Haupt- und Nebenstation auf maximal 2 bis 5 Meter reduzieren. Eine solch geringe Reichweite von 2 bis maximal 5 Meter stellt überhaupt den Sinn von Funkanlagen in Frage.

Würde man trotz hoher Empfindlichkeit mit einer Reserve von nur 20 dB statt 40 dB arbeiten, so ist erfahrungsgemäß mit hoher Wahrscheinlichkeit mit Störungsmeldungen zu rechnen, die im Laufe der langen Lebensdauer auftreten.

Die maximale Leistung, mit der ein Funk-Sender senden darf, ist durch die ETSI Norm EN300220 begrenzt. Um eine Reserve von 40 bis 50 dB zu erreichen bleibt nur die Möglichkeit, die Empfindlichkeiten der Hauptstation M und Nebenstationen zu maximieren. Bei den meisten Systemen erreicht der Empfänger gerade eine Empfindlichkeit von nur -100 bis -105 dBm (Datenrate 5 kBit/s, Manchester 10 kBaud).

Um die hohe Reserve in der Leistungsbilanz zu erreichen, sollte entsprechend eine bessere Empfindlichkeit von -125 dBm (Datenrate 5 kBit/s, Manchester 10 kBaud) erreicht werden. Eine Empfindlichkeit von -125 dBm ist für sich allein schon eine technische Herausforderung. Zudem bringt sie noch technische Probleme und große Nachteile für die Selektion mit sich. Daher verzichten viele Systeme auf die extrem hohe Empfindlichkeit und müssen so mit hoher Störungswahrscheinlichkeit leben.

Hohe Empfindlichkeit war bisher ein Synonym für schlechte Selektivität und hohe Wahrscheinlichkeit für den Empfang fremder HF-Signale.

Ein empfindliches System findet im Bereich von -110 bis -125 dBm Störnadeln und hohes Rauschen. Fällt der Empfänger der Haupt- oder der Nebenstation auf fremde Signale (wie Störnadeln oder Rauschen) rein, so verliert er Zeit und Strom und vor allem verpasst sein eigenes Signal, das er empfangen muss. Die Funkkommunikation zwischen den beiden Kommunikationspartnern fällt dann aus und eine Störungsmeldung muss ausgesendet werden. Der Empfang falscher Signale ist auch der Hauptgrund für Synchronisationsprobleme bei heutigen Funksystemen.

Es ist heutzutage äußerst selten, einen Einsatzort für eine Gefahrenmeldeanlage zu finden, wo die Frequenzbänder 433 bis 434 MHz und 863 bis 870 MHz bis zu einem Leistungspegel von -125 dBm rauschfrei sind.

Jeder Computer, jedes Handy, jedes schnurlose Telefon, jedes Babyphon, jedes schnurlose Headset usw. strahlt im Hochfrequenz Bereicht. Diese HF-Emissionen sind nicht nur in ihren eigenen Frequenzbändern (in denen diese Geräte arbeiten) zu finden, sondern auch in den Bändern 433 und 868 MHz, in denen auch die Gefahrenmeldeanlagen arbeiten. Diese HF-Ausstrahlungen nehmen die Form von Störnadeln an. Durch solche Nachbarstörer findet man in den eigenen Frequenzkanälen einen ziemlich hohen Rauschpegel.

Das Problem dabei ist, dass dieses hohe Rauschniveau teilweise sogar legal ist. In direkter Nachbarschaft zu den Frequenzkanälen von Gefahrenmeldeanlagen dürfen verschiedene Geräte eine Leistung von bis zu -37/-36 dBm abstrahlen. Zum Beispiel: Babyphone zwischen 869.7 und 870 MHz, Headsets zwischen 863 und 864 und RF ID Geräte mit einer Leistung von 0,5 bis 2 Watt zwischen 865 und 868 MHz.

Selbst wenn von den -37 bzw. -36 dBm nur ein extrem kleiner Teil bei den Gefahrenmeldesystemen ankommt, bleibt dieses Signal stark genug um möglicherweise Störungen hervorzurufen. Vor allem bei Empfängern, die bis zu -125 dBm empfindlich sind. In den nächsten Jahren werden diese Störausstrahlungen noch mehr zunehmen, weil sich der Verkauf von den verschiedensten Funkkomponenten weltweit vervielfachen wird.

Zudem kommt erschwerend hinzu, dass die Gefahrenmeldeanlage selbst ein oder mehrere integrierte Schaltkreise aufweisen. Diese Rechner verursachen das s. g. "ON BOARD NOISE" für die Funkkomponenten, welches nur schwer technisch zu selektieren ist. Noch schwerer wiegen die Störsignale, die vom Mikrocontroller und der Quarze der Funkkomponenten stammen. Diese Störsignale sind örtlich extrem nah zu den Funkeinheiten und verursachen ein hohes Rauschen bzw. Störnadeln.

Ein System dessen Empfindlichkeit bei -100 dBm beträgt, erkennt 99,9% dieses Rauschen und der Störnadeln gar nicht. Die extrem hohe Empfindlichkeit von anderen Systemen ist daher nicht unbedingt beliebt, es wird deshalb leider auf mindestens 20 dB verzichtet wird.

Durch Frequenzspreizungsverfahren - Verfahren (so genannten Spread - Spektrums - Verfahren) und ähnliche Verfahren, versucht man gegen diese Störnadeln und hohes Rauschniveau vorzugehen. Allerdings brauchen diese Verfahren eine hohe Bandbreite von mindestens mehreren Megahertz, damit sie effizient und wirkungsvoll agieren. Der Stromverbrauch von Frequenzspreizungsverfahren ist dazu sehr hoch und eignet sich nicht für diese Anwendungen von Gefahrenmeldeanlagen (Brand, Einbruch), bei denen man eine hohe Lebensdauer von 5 bis 10 Jahren anstrebt. Für die Frequenzkanäle, u.a. die Alarmkanäle, z.B. im Band 868 MHz, wo die Bandbreite nur 25 bis 100 kHz breit sind, kommen solche Verfahren überhaupt nicht in Frage.

Wenn das Nutzsignal stark ist, bzw. viel stärker als die Störsignale, dann ist es relativ einfach, die Störungen zu unterdrücken. Dies ist aber nicht immer der Fall. Oft, sind die Störungen stark bzw. das eigene Signal zu schwach. Erst dort, also bei schwachen Nutzsignalen bzw. an der Empfindlichkeitsgrenze, unterscheiden sich gute Empfangssysteme von Standardsystemen.

### Problemlösung

Die Funknachricht einer Nebenstation oder der Hauptstation weist sowohl im Frequenz- als auch im Amplitudenverlauf eindeutige Merkmale auf. Hierfür kann jedes Signal, insbesondere jedes Routinesignal einen besonderen Impuls I1 bzw. I11 aufweisen, wie in Fig. 3 gezeigt. Der Amplitudenverlauf und der Frequenzverlauf sind darin eindeutig und werden nur dem eigenen System zugewiesen: Beispielhaft wird die Amplituden am Anfang der Funknachricht treppenförmig um jeweils 3 dB gesteigert, dann wieder um 2 dB gesenkt, dann wieder um 4 erhöht. Diesen Amplitudenverlauf haben alle Sender nach dem neuen Verfahren gemeinsam. So erkennt man leicht das eigene Signal. Ein Störsignal, der genau diesen Amplitudenverlauf aufweist wäre extrem unwahrscheinlich. Dieser Amplitudenverlauf ist zeitlich sehr kurz (< 1 ms) und kostet kaum mehr Strom. Ein Signal, der diesen Amplitudenverlauf nicht aufweist, wird schnell aussortiert.

Der Amplitudenmusterverlauf geht noch weiter: Nach der letzten Erhöhung im Beispiel um 4 dB beginnt der für jede Funkzelle, aufweisend die Hauptstation M1 und die Nebenstation M1 S1 bis M1 Sn, typische Amplitudenverlauf, beispielsweise absinken der Leistung um 3 dB dann Erhöhung um 5 dB. So kann man nicht nur erkennen, ob es sich um ein System nach diesem Verfahren handelt, sondern sogar, um exakt welche Funkzelle es sich handelt.

Auch, wenn jede Funkzelle (Hauptstation Mx und Nebenstation Mx Sn) auf verschiedene Frequenzen arbeiten, kann es manchmal hilfreich sein, wenn jede Hauptstation zum Schluss ihr eigenes Amplitudenmuster hat, z.B. wenn in bestimmten Fällen die Hauptstationen miteinander kommunizieren sollen.

Beim Amplitudenverlauf geht nicht um eine sehr genaue Messung des Pegels, sondern es geht um einen typischen Verlauf, also um eine Mustererkennung. Dabei kann die genaue Pegelermittelung um +/- 1 dB abweichen.

Die zweite Selektionsmaßnahme ist der Frequenzmusterverlauf. Ist der Amplitudenverlauf richtig erkannt, kommt anschießend die Frequenzmustererkennung. Die Frequenz des Sendesignals der Haupt- oder Nebenstation wird dabei kurz nacheinander um jeweils ein paar kHz verschoben gesendet, so identifizieren die Empfänger der Haupt- oder der Nebenstation dieses Signals als eindeutige Systemeigenes Signal und nicht als Fremdes Signal (Störer).

Durch das aufeinander folgende Senden von zwei Signalen, bei dem ein bestimmter Frequenzunterschied liegt (z.B. 15 kHz oder z.B. 17 kHz), erkennt der Empfänger, dass dies kein Zufall sein kann, sondern es sich hier wirklich um das eigene Systemsignal handelt. Der Abstand der beiden seriellen Frequenzen zueinander gibt jeder Haupt-/Nebenstation ein eindeutiges Merkmal, dass sich um das erwartete Signal handelt. Umgekehrt hat ein Störer oder Fremdsignal keine Chance, durch dieses "Filter" hindurch zu kommen und exakt diesen Frequenzverlauf nachzubilden.

Ein Störsignal, das zuerst den Amplitudenverlauf und danach den Frequenzverlauf erfüllt, ist realistisch nicht möglich. Somit wäre die Selektion nach dem neuen Verfahren trotz hoher Empfindlichkeit möglich, ohne dabei Gefahr zu laufen, auf ein fremdes Störsignal hereinzufallen.

Man beachte, dass die Reihefolge des Amplitudenverlauf und Frequenzverlauf getauscht werden kann. Es ist sogar denkbar, beide Verläufe zum gleichen Zeitpunkt zu kombinieren: Nachdem der Frequenzverlauf eine relativ kleine Frequenzdifferenz, beispielsweise 15, 17 oder 20 kHz, aufweist, bleibt die Pegelmessung (RSSI Signal) für den Amplitudenverlauf, davon nahezu unberührt.

### Weiterer Aspekt der Erfindung: Anpassung der Resonanzkurve der Antennen

### Problemstellung:

Eine bedeutende Ursache der Störungen und der Kommunikations-Ausfällen ist, dass das empfangene HF-Feld bzw. das gesendete HF-Feld von der Antenne schwach ist. Das empfangene bzw. das gesendete HF-Feld an der Hauptstation und/oder an der Nebenstation wird dann schwach, wenn die Antennen an der Haupt- oder Nebenstation nicht mehr in Resonanz sind.

Ein hoher Temperaturunterschied, ein im Laufe des langen Lebensdauer neue dazu gekommener Gegenstand in direkter Nähe der Antennen, usw., führen dazu, dass die Antennen sich aus ihrer Resonanzkurven wegdriften und dabei problemlos 10 dB an Reflektionsfaktor verlieren.

Die Antennen der Hauptstation und der Nebenstation werden entwickelt und in der Fertigung so angepasst und kalibriert, dass die Mitte der Resonanzkurve bei alle Antennen bei der Arbeitsfrequenz liegt. Je nach Position im Installationsfeld und je nach Umweltbedingungen (Temperatur und Feuchte) verschiebt sich die Resonanzkurve der Antennen jedoch. Die Resonanzkurve verschiebt sich auch, wenn unmittelbar in der Nähe der Haupt- oder Nebenstation sich ein oder mehrere Hindernisse/Gegenstände befinden oder es dazu kommt. Im Laufe einer Lebensdauer von 5 bis 10 Jahren sind neue oder andere Hindernisse, die Antennenresonanzen beeinflussen, gar nicht unwahrscheinlich.

Wenn sich die Antennen nicht mehr in ihrer Resonanzkurven befinden, verlieren sie massiv an ihrem Antennengewinn. Die Konsequenz ist, dass die Reichweite des Systems, also Reichweite zwischen Haupt- und Nebenstation, sich auf die Hälfte oder sogar auf ein Viertel reduziert. Häufige Kommunikationsstörungen sind die Folge.

### Problemlösung:

Die Haupt- bzw. Nebenstationen senden sich gegenseitig einen konstanten HF-Puls I2 bzw. 112, ein s. g. Antennen-Tune-Pulssignal, wie in Fig. 3 gezeigt. Dieses Pulssignal ist von ein einer kurzen Dauer von 20 bis maximal 500 µs. In dieser Zeit misst der Empfänger Amplitude und Phase des HF-Feldes und korrigiert das Anpassnetzwerk der Antenne/Antennen, bis ein Maximum in der Amplitude erreicht wird. Dort sind Antenne/Antennen in voller Resonanz.

Das Anpassnetzwerk der Antenne/Antennen kann man online anpassen/tunen, bis die Amplitude ein Maximum erreicht, in dem man für das Anpassnetzwerk statt normaler diskreter Bauelemente, andere Bauelemente verwendet. Diese sind statt eines Kondensators, z.B. eine Varaktordiode oder z.B. ein Gyrator an der Stelle von einer Induktivität oder z.B. schaltbare Stripleitungen. So kann man die Kapazitätswerte mit einem Steuersignal um ein paar Picofarad ändern. Das Gleiche gilt für die Induktivitäten. Hier wird die Induktivität um ein paar Nanohenry optimiert. In den meisten Fällen reicht diese kleine Optimierung des Anpassnetzwerks aus, um wieder eine ideale Resonanzkurve der Antennen zu erreichen und den Reflexionsfaktor der Antenne zu minimieren.

So kann man in geringem Maße die Antennenanpassung online regelmäßig überprüfen und gegebenenfalls verbessern. Dadurch bleibt das empfangene Signal bzw. das gesendete Signal von den Antennen stark genug um Kommunikationsausfälle und Störungen zu vermeiden.

Zusammengefasst weist der Anfang eines jeden Routinesignals drei Impulse auf, wie in Fig. 3 gezeigt. Vorzugsweise folgen diese drei Impulse in der folgenden Reihe:
1. Ein Erkennungsimpuls I1 bzw. I11, durch individuellen Amplituden- und Frequenzverlauf,
2. ein Impuls I2 bzw. 112 zur Korrektur der Resonanzkurve der Empfangsantenne und
3. ein Synchronisationsimpuls I3 zur Zeit- und/oder Frequenzsynchronisierung, wobei dieser lediglich von der Hauptstation gesendet wird, während die gerade aktive Nebenstation zeitgleich empfängt und einen Abgleich vornimmt.

### Beispiel: Gestörter Funktionsablauf während der Integrationsprüfung

Das folgende Beispiel behandelt eine fehlerhafte Kommunikation zwischen der Hauptstation und einer Nebenstation im Normalbetriebsmodus, wobei die beiden im Voll-Duplex-Modus auf zwei verschiedenen Frequenzen miteinander kommunizieren.

Es können sowohl Hauptstation M1 als auch Nebenstationen S1 jeweils mindestens zwei Empfangseinrichtungen RX1M, RX2M und RX1S, RX2S bzw. mindestens zwei Sendeeinrichtungen TX1M, TX2M und TX1S, TX2S aufweisen. Bei diesen handelt es sich beispielsweise um zwei halb-duplex- oder voll-duplexfähige Transceiver pro Haupt- oder Nebenstation. Die beiden Transceiver weisen vorzugsweise eine Isolierung zwischen einander von mindestens 40dB auf. Die mehrfachen Empfangseinrichtungen bzw.

Sendeeinrichtungen sowohl bei der Hauptstation (Master) als auch bei der Nebenstation (Slave/Melder) nutzen dabei vorzugsweise dieselben Antennen, d.h. es wird eine s. g. "Antennen-Diversity - Verfahren" (Antennen-Diversität) angewandt. Außerdem nutzen sie vorzugsweise dieselben Antennen-Anbindungen und Schnittstellen und denselben Mikrokontroller. Die mehrfachen Empfangs- bzw. Sendeeinrichtungen können verschiedene Einstellungen und Protokolle haben: Datenrate, ZF-Bandbreiten, Basisbandfilter und verschiedene Modulationsarten.

Die Nebenstation (Slave) sendet der Hauptstation (Master) in zyklischen Zeitabschnitten, typischerweise alle 32 Sekunden, eine Nachricht und meldet den aktuellen Status. Dies wird als Integritätsprüfung oder Routineüberprüfung bezeichnet, wobei die Nachricht mittels des so genannten ersten Routinesignals, in diesem Fall des Nebenstations-Routinesignals and die Hauptstation gesandt wird. Es wird parallel dazu zum gleichen Zeitpunkt, aber auf einer anderen Frequenz, von der Hauptstation eine Nachricht an die Nebenstation gesendet, wobei die Nachricht mittels es so genannten Routinesignals, in diesem Fall des Hauptstations-Routinesignals and die Nebenstation gesandt wird.

Der Nebenstation wird so mitgeteilt, dass seitens der Hauptstation alles in Ordnung ist und keine weiteren Nachrichten mehr erfolgen. Obwohl der Nachrichtenaustausch gleichzeitig abläuft, stellt die Hauptstation parallel fest, ob auf der anderen Frequenz die Nachricht von der Nebenstation gerade eintrifft oder nicht. Die Hauptstation kann zwar zu diesem Zeitpunkt die Nachricht von der Nebenstation noch nicht interpretieren, sie kann aber zumindest das Eintreffen bestätigen oder auch nicht. Dies kann sie im letzten Bit der aktuellen Nachricht an die Nebenstation mitteilen. Das gleiche gilt genauso umgekehrt für die Nebenstation. Beide Stationen sind zur Zeit des Austauschs der Routinesignale im Empfangsmodus.

Eine weitere Kommunikation zwischen beiden Kommunikationspartnern findet im Anschluss an die Integrationsprüfung nur dann statt, wenn Fehler beim Empfang der Nachrichten aufgetreten sind. Beide Kommunikationspartner sind jetzt im Empfangsmodus. Falls bei einem der Kommunikationspartner Störungen auftreten, ist der zweite in Empfangsbereitschaft und kann so entsprechend reagieren. Im schlimmsten Fall können Störungen auf beiden Kommunikationswegen (d.h. Hauptstation → Nebenstation und Nebenstation → Hauptstation) auftreten. Im Fall einer Störung weichen die Kommunikationspartner auf einen Nachbarkanal innerhalb des gestörten Frequenzbandes aus. Dieser Frequenzsprung erfolgt typischerweise fünfbis siebenmal. Das Ausweichen erfolgt sowohl bei einer Störung in einem Frequenzband (z.B. 434 MHz oder 868 MHz), als auch wenn eine Störung in beiden Frequenzbändern vorliegt.

Kommt in diesem Fall eine Kommunikation in einem der Frequenzbänder (z.B. 868MHz) nicht zustande, dann wird innerhalb dieses Bandes auf einen Nachbarkanal gesprungen (typischerweise fünf- bis siebenmal). Wenn eine Kommunikation in beiden Frequenzbändern nicht erfolgen kann, wird entsprechend in beiden Bändern auf einen Nachbarkanal gesprungen (typischerweise fünf- bis siebenmal).

Ein Sprung auf einen Nachbarkanal innerhalb des Frequenzbandes ist streng genommen unnötig, denn beide Kommunikationspartner können prinzipiell auch in einem Frequenzband miteinander kommunizieren. Der Vorteil liegt hierbei in der Ermittlung eines freien Alternativkanals im selben Frequenzband, der bei der nächsten Integritätsprüfung verwendet werden kann. Durch diese intelligente Frequenznutzung ist die Wahrscheinlichkeit äußert gering, dass alle Haupt- und Nebenkanäle (d.h. beide Frequenzbänder 434 Mhz und 868 MHz) gestört sind. Eine solche Störung ist auch in einem Sabotagefall nicht einfach herzustellen.

Nachfolgend wird Anhand eines Beispiels die Funktionsweise des neuen Verfahrens beschrieben:

Die Hauptstation, im Folgenden Master genannt, besitzt in diesem Beispiel zwei Transceiver und arbeitet im Voll-DUPLEX Mode gleichzeitig auf zwei Frequenzkanälen in verschiedenen Bändern: 433.92 MHz und 868.3 MHz. Die Nebenstationen, im Folgenden Slaves genannt, besitzen in diesem Beispiel zwei Transceiver und arbeiten im Voll-DUPLEX Mode gleichzeitig auf zwei Frequenzkanälen in verschiedenen Bändern: 433.92 MHz und 868.3 MHz.

### Normaler Funktionsablauf (Integritätsprüfung ohne Störung):

Slave n beginnt von seiner Seite aus die Integrationsprüfung, in dem er in dem für ihn bestimmten Zeitzyklus n die Nachricht an den Master sendet, dass er voll funktionsfähig ist und keine besonderen Vorkommnisse bestehen. Der Slave sendet dabei mit Transceiver #1 auf der Frequenz 868.3 MHz.

Zeitgleich arbeitet Transceiver #2 des Slave bei 433 MHz und wartet auf die Nachricht der Integrationsprüfung des Masters, in der dieser mitteilt, dass von seiner Seite alles in Ordnung ist und bei ihm gerade die Nachricht vom Slave bei 868 MHz eintrifft. Sollte die Nachricht des Slave zur Integrationsprüfung vom Master nicht verstanden worden sein, wird dieser sich noch mal beim Slave melden. Dafür befindet sich Transceiver #1 des Slave (868 MHz Band) für den Fall einer Störung jetzt im Empfangsmodus.

Der Transceiver #2 des Slave (433 MHz Band) ist nur im Störungsfall aktiv und sendet dem Master die Nachricht, dass er seine Nachricht nicht oder nur teilweise gehört hat. Ist die erste Nachricht vom Master auf 433 MHz verständlich und kommt keine Nachricht vom Master auf 868 MHz zurück.

Die Integritätsprüfung war erfolgreich und der Slave geht in den Low Power Mode. Der Master bereitet sich für den Zeitzyklus n+1 für den Slave n+1.

### 1) Störung auf 868 MHz

Der Master schickt seine Nachricht auf 433 MHz. Diese wird vom Slave empfangen und verstanden.

Die parallele, d.h. korrespondierende Nachricht vom Slave zum Master auf 868 MHz kommt nicht an bzw. wird vom Master nicht verstanden. Der Master erfährt diese Kommunikationsstörung durch Nicht-Empfangen des Anfangs der erwarteten Nachricht. Der Slave wiederum kann die Kommunikationsstörung daraus erfahren, dass er in der parallelen Nachricht des Masters am Ende keine Bestätigung erhält. Beide Kommunikationspartner (Master und Slave) reagieren auf eine solche Störung mit einem zeitgleichen Kanalwechsel auf einen anderen Frequenzkanal (innerhalb des 868 MHz Bandes) und versuchen wieder zu kommunizieren. Diese Prozedur wiederholen beide Partner maximal 7 Mal.

Sollte es immer noch nicht zu Kommunikation kommen, so versuchen sie auf über das 433 MHz Band die "Ursachen" zu finden. Beispielsweise kann überprüft werden, ob der Pegel zu schwach ist, und/oder ob es sich hier um einen Breitband-Störer handelt Alle diese Informationen sind für den Master wichtig, denn die Wahrscheinlichkeit, dass es bei den anderen Meldern das gleiche passiert ist hoch. So kann sich der Master auf diese Störung einstellen.

Vorteilhafterweise kann bei einem erfolgreichen Wechsel auf einen Nachbarkanal die Hauptstation mittels eines Broadcast-Signals, das ein Signal ist, das an alle Nebenstationen gerichtet ist, den Nebenstationen den Wechsel mitteilen. Das Broadcast-Signal wird außerhalb des Routinezeitschlitzes ausgesendet. Somit wird also in dem Frequenzbereich der benützte Kanal langfristig für alle Nebenstationen gewechselt.

Solange die Kommunikation mindestens über das 433 MHz Band funktioniert, merkt die übergeordnete Zentrale der Gefahrenmeldeanlage, beispielsweise eine BMZ (Brandmeldezentrale) von all diesen Maßnahmen nichts.

### 2) Störung auf 433 MHz

Der Slave schickt seine Nachricht auf 868 MHz. Diese wird vom Master empfangen und verstanden.

Die parallel vom Master zum Slave auf 434 MHz gesendete Nachricht kommt aber aufgrund einer Störung nicht an bzw. wird vom Slave nicht verstanden. Beide Kommunikationspartner (Master und Slave) reagieren auf eine solche Störung mit einem zeitgleichen Kanalwechsel auf einen anderen Frequenzkanal (innerhalb des 434 MHz Bandes) und versuchen wieder zu kommunizieren. Diese Prozedur wiederholen beide Partner maximal 7 Mal. Sollte es immer noch nicht zu Kommunikation kommen, so versuchen sie auf über das 868 MHz Band die "Ursachen" zu finden (siehe Oben).

Solange die Kommunikation mindestens über die 868 MHz Band funktioniert, merkt die übergeordnete Zentrale der Gefahrenmeldeanlage von all diesen Maßnahmen nichts.

### 3) Störung auf 868 MHz und 434 MHz

Kritisch wird es dann, wenn die Kommunikation sowohl im 868 MHz Band, als auch im 433 MHz Band ausfällt. Obwohl in beiden Bändern je siebenmal auf sieben verschiedene Frequenzkanäle gesprungen wurde, kommt es ausnahmsweise nicht zu einer erfolgreichen Kommunikation. Das Kommunikationssystem weist jedoch eine Voreinstellung auf, auf Grund derer beide Kommunikationspartner im Voraus verschiedene Maßnahmen zur Erhöhung des sinkenden HF-Pegels in diesem Fall durchführen werden.

Nun wird jedoch angenommen, dass diese Maßnahmen die Störung nicht vermeiden können. Erfahrungsgemäß ist es äußerst unwahrscheinlich, dass beide Bänder vollkommen gestört sind. Es ist eher wahrscheinlich, dass entweder die Haupt- oder die Nebenstation ausgeschaltet ist oder der HF-Pegel plötzlich massiv eingebrochen ist. In diesem Fall schickt in einem genau definierten Zeitraster der Master, später auch der Slave an allen anderen noch funktionsfähigen Slaves eine Notfall-Nachricht:
Es gibt zwei Arten von Notfallnachrichten:
   1) Eine MASTERSLAVE Notfallnachricht wird vom Master initiiert. Der Master bittet alle anwesenden funktionsfähigen Slaves eine "SOS" Nachricht zum ausgefallenen Slave zu senden. Dieser soll sich über einen beliebigen weiteren Slave melden, den er hört. Die MASTERSLAVE Nachrichten werden immer auf 433 MHz gesendet. Alle funktionsfähigen Slaves fungieren praktisch wie ein "Lautsprecher". Daraufhin kann der "verlorene" Melder sich direkt melden oder im reservierten Zeitschlitz seine Meldungen absetzen.
   2) Eine SLAVEMASTER Notfallnachricht wird vom ausgefallenen SLAVE initiiert. Der ausgefallene Slave bittet alle anwesenden funktionsfähigen Slaves eine "SOS" Nachricht zum Master zu senden. Dieser soll sich über einen beliebigen Broker melden. Bisher war die Kommunikation zwischen Slave und Master höchstens über vier Nachbarn möglich. Im Notfall gibt es hierfür keine Einschränkungen mehr. Die SLAVEMASTER Nachrichten werden immer auf 868 MHz gesendet.

Durch diese Maßnahmen ist die Reichweite des Systems um ein Mehrfaches erweitert. Ein Ausfall wegen zu geringer Reichweite daher unwahrscheinlicher.

Das Absetzen der vielen Notfallnachrichten MASTER-SLAVE oder SLAVEMASTER kann nicht zu Kollision führen. Jeder Slave hat ein genau definiertes Zeitfenster innerhalb der typischen Periode von 32 Sekunden, in dem nur dieser Slave seine MASTERSLAVE oder SLAVEMASTER Nachricht absetzen darf.

Erst wenn diese "SOS" Nachrichten nicht helfen, eine Kommunikation zwischen der Hauptstation (Master) und den Nebenstationen (Slaves) aufrecht zu erhalten, wird eine Störung bzw. die fehlende Kommunikation der übergeordneten Zentrale gemeldet.

Die Angaben über die Frequenzbänder 868 und 433 MHz sind hier nur typisch und als Beispiel gemeint. Es könnten ohne weiteres andere Bänder genutzt werden oder sogar Subbänder eines einzigen Bandes sein. Beispielsweise: 863 MHz und 869 MHz.

## Patentansprüche

1. Verfahren zur Installation einer Gefahrenmeldeanlage, aufweisend mindestens eine Hauptstation **(M1)** und eine oder mehrere Nebenstationen **(S1, S2 Sn)**, wobei zwischen einer Hauptstation **(M1)** und dieser zugeordneten Nebenstationen **(S1, S2 Sn)** eine Kommunikation mittels Funkübertragung erfolgt, und die Kommunikation in mindestens einem bestimmten Frequenzbereich durchgeführt wird,
**dadurch gekennzeichnet, dass**
a) mehrere Hauptstationen **(M1, M2, Mn)** vorhanden sind,
b) eine erste Hauptstation **(M1)** nach Einschalten ein Anwesenheitssignal an alle weiteren Hauptstationen **(M2 - Mn)** aussendet,
c) die erste Hauptstation **(M1)** solange den Anmeldemodus verweigert, bis keine weitere Hauptstation **(M2 - Mn)** mehr den Anmeldemodus meldet,
d) die erste Hauptstation **(M1)** mindestens einen Frequenzbereich belegt, der noch frei und ungestört ist und
e) die erste Hauptstation **(M1)** in den Anmeldemodus wechselt.

2. Verfahren nach Anspruch 1,
**dadurch gekennzeichnet, dass**
das Anwesenheitssignal andere Hauptstationen **(M2 - Mn)** auffordert, mitzuteilen,
- ob sich diese im Anmeldemodus befinden, in dem die Nebenstationen **(S1, S2 Sn)** bei der Hauptstation **(M2 - Mn)** angemeldet werden, und/oder
- ob sich diese im Normalbetriebsmodus befinden und welchen Frequenzbereich die sich im Normalbetriebsmodus befindlichen Hauptstationen **(M2 - Mn)** für die Kommunikation belegt haben.

3. Verfahren nach dem Anspruch 1 oder 2,
**dadurch gekennzeichnet, dass**
- die erste Hauptstation **(M1)** den Anmeldemodus mit einem Anmeldemodus-Signal allen anderen Hauptstationen **(M2 - Mn)** bekannt gibt
und/oder
- die Hauptstation **(M1)** den von ihr zu belegenden mindestens einen Frequenzbereich dadurch bestimmt, dass sie die von den anderen Hauptstationen **(M2 - Mn)** erhaltenen Informationen über die belegten Frequenzbereiche auswertet.

4. Verfahren zur Installation eines Gefahrenmeldersystems, welches Teil einer übergeordneten, zentralen Gefahrenmeldeanlage sein kann, und das eine Hauptstation **(M)** und mehrere Nebenstationen (S1, S2 Sn) aufweist, zwischen denen eine Kommunikation mittels Funkübertragung erfolgt, nach dem Anspruch 1 oder 2,
wobei die Kommunikation zwischen den Nebenstationen **(S1, S2 Sn)** und **der** Hauptstation **(M)** zur Anmeldung der Nebenstationen **(S1, S2 Sn)** an die Hauptstation **(M)** auf einem vorbestimmten Servicefrequenzkanal durchgeführt wird,
**dadurch gekennzeichnet, dass**
- mehrere Servicefrequenzkanäle in der Hauptstation **(M)** voreingestellt sind, die vorzugsweise auf dem Frequenzband möglichst weit auseinander liegen;
- die Hauptstation **(M)** die Servicefrequenzkanäle überprüft und den Servicefrequenzkanal auswählt, der am wenigsten gestört ist;
- die Hauptstation **(M)** ein Anmeldesignal auf dem ausgewählten Servicefrequenzkanal an alle Nebenstationen aussendet; und
- die Nebenstationen **(S1, S2 Sn)** durch Ändern ihrer eingestellten Frequenz nach dem ausgewählten Servicefrequenzkanal suchen.

5. Verfahren nach dem vorherigen Anspruch,
**dadurch gekennzeichnet, dass**
das Anmeldesignal gesendet wird, bis sich alle Nebenstationen **(S1, S2 Sn)** bei der Hauptstation **(M)** angemeldet haben.

6. Verfahren nach dem Anspruch 4 oder 5,
**dadurch gekennzeichnet, dass**
eine Anmeldung der Nebenstationen **(S1, S2 Sn)** an die Hauptstation **(M)** auf dem von der Hauptstation **(M)** ausgewählten Servicefrequenzkanal durchgeführt wird.

7. Verfahren nach dem vorherigen Anspruch,
**dadurch gekennzeichnet, dass**
die Hauptstation **(M)** den Nebenstationen **(S1, S2 Sn)** mindestens einen von ihr bestimmten Frequenzbereich bei der Anmeldung mitteilt, der für die Kommunikation im Normalbetriebsmodus verwendet wird und einen Zeitpunkt mitteilt, zudem auf den mindestens einen Frequenzbereich gewechselt wird.

8. Verfahren nach einem der vorherigen Ansprüche,
**dadurch gekennzeichnet, dass**
- im Normalbetriebsmodus eine Kommunikation zwischen der Hauptstation **(M)** und den Nebenstationen **(S1, S2 Sn)** in mindestens zwei Frequenzbereichen auf jeweils einem Basiskanal erfolgt,
- bei einem ersten und/oder zweiten gestörten Basiskanal die Hauptstation **(M)** und die jeweilige Nebenstation **(S1, S2 Sn)** auf einen anderen Kanal innerhalb des entsprechenden Frequenzbereichs wechseln, und
- vorzugsweise ein weiterer Frequenzkanalwechsel, insgesamt vorzugsweise bis fünf- oder siebenmal, erfolgt, falls die Störung nach dem Wechsel noch auftritt.

9. Verfahren nach Anspruch 8,
**dadurch gekennzeichnet, dass**
- nach einer vorbestimmten Anzahl an Frequenzkanalwechseln ein Breitband - Hintergrundscan durchgeführt wird, bei dem das Frequenzspektrum breitbandig nach einem neuen ungestörten Frequenzbereich abgesucht wird, wobei während dessen weiterhin eine Kommunikation zwischen der Hauptstation **(M)** und den Nebenstationen **(S1, S2 Sn)** im nicht gestörten ersten oder zweiten Frequenzbereich erfolgt; und
- nach Ermittlung eines neuen Frequenzbereichs auf diesen gewechselt wird.

10. Verfahren nach dem vorherigen Anspruch,
**dadurch gekennzeichnet, dass**
- die Hauptstation **(M)** mindestens zwei Transceiver aufweist;
- den Breitband-Hintergrundscan mit dem Transceiver durchführt, der im gestörten Frequenzbereich eingesetzt worden ist, und
- bis solange eine Kommunikation mit den Nebenstationen **(S1, S2 Sn)** zumindest über den Transceiver erfolgt, der im ungestörten Frequenzbereich eingesetzt ist.

11. Verfahren nach Anspruch 9 oder 10,
**dadurch gekennzeichnet, dass**
der Breitband-Hintergrundscan über einen Zeitraum, vorzugsweise von mindestens 2 Stunden, besser mehr als 20 Stunden und am besten über mehrere Tage, durchgeführt wird, bei dem statistische Daten, wie beispielsweise die Häufigkeit, Art und Anzahl von Störungen gesammelt werden, und diese Daten im Anschluss zur Bestimmung eines neuen, möglichst ungestörten Frequenzbereichs ausgewertet werden.

12. Verfahren nach einem der vorherigen Ansprüche,
**dadurch gekennzeichnet, dass**
- vor dem erstmaligem Einschalten aller Hauptstationen diejenigen Frequenzkanäle ermittelt werden, in denen später die Gefahrenmeldeanlage arbeitet, und
- anschließend, vorzugsweise vor dem Einbau der Gefahrenmeldeanlage, die Anmeldung der Nebenstation **(S1, S2 Sn)** und der mindestens einen Hauptstation **(M1, M2, Mn)** durchgeführt wird, wobei bei der Anmeldung die ermittelten Frequenzkanäle in den Nebenstationen und in der mindestens einen Hauptstation **(M1, M2, Mn)** eingestellt werden.

13. Verfahren nach einem der vorherigen Ansprüche,
**dadurch gekennzeichnet, dass**
sich die Nebenstationen **(S1, S2 Sn)** vor ihrer Installation in einem Schlafmodus befinden, indem sie periodisch für eine kurze Zeit aufwachen und nach einem Aufwecksignal der Hauptstation**(M1, M2, Mn)**, vorzugsweise dem Anmeldesignal der Hauptstation**(M1, M2, Mn)**, suchen.

14. Gefahrenmeldesystem zur Funkübertragung von Melderdaten, welches Teil einer übergeordneten, zentralen Gefahrenmeldeanlage sein kann, und welches eine Hauptstation **(M)** und eine oder mehrere ihr zugeordnete, über Funk mit der Hauptstation **(M)** verbundene, Nebenstationen **(S1, S2 Sn)** aufweist, bei der an die Hauptstation **(M)** Melderdaten sowie die Nebenstationen **(S1, S2 Sn)** identifizierende Adressen übermittelt werden, geeignet zum Ausführen eines Verfahrens nach einem der vorherigen Ansprüche 4 bis 13.

15. Zentrale Gefahrenmeldeanlage
- aufweisend eine übergeordnete Zentrale, wie eine Brandmeldezentrale **(BMZ),** und
- mindestens ein Gefahrenmeldesystem nach dem vorherigen Anspruch, deren Hauptstation **(M)** mit der übergeordneten Zentrale verbunden ist, vorzugsweise über eine serielle Schnittstelle.

## Claims

1. A method for installing a security system, comprising at least one main station M1 and one or plural sub stations (S1, S2, Sn) wherein a communication by radio transmission is performed between a main station (M1) and sub stations (S1, S2, Sn) associated with the main station and the communication is performed at least in one frequency range,
**characterized in that**
a) plural main stations (M1, M2, Mn) are provided,
b) a first main station (M1) transmits a presence signal to all other main stations (M2 - Mn) after the first main station is turned on,
c) the first main station (M1) rejects the registration mode until no additional main station (M2 - Mn) reports the registration mode any more,
d) the first main station (M1) covers at least one frequency range which is still vacant and uninterfered,
e) the first main station (M1) switches into the registration mode.

2. The method according to claim 1,
**characterized in that**
the presence signal requests that other main stations (M2, - Mn) to report
- whether the other main stations are in the registration mode in which the substations (S1, S2, Sn) are being registered with the main station (M2 - Mn), and/or
- whether the other main stations are in the normal operating mode and which frequency range the main stations (M2 - Mn) disposed in the normal operating mode have occupied for communications.

3. The method according to claim 1 or 2,
**characterized in that**
- the first main station (M1) communicates the registration mode with a registration mode signal to all other main stations (M2 - Mn) and/or
- the main station (M1) determines the at least one frequency range to be occupied by it **in that** information received from the other main stations (M2 - Mn) is processed through the occupied frequency ranges.

4. The method for installing a security system which can be part of a superimposed central security system and which includes a main station (M) and plural sub stations (S1, S2, Sn) between which a communication is provided by radio transmission according to claim 1 or 2,
wherein the communication between the sub stations (S1, S2, Sn) and the main station (M) for registering the substations (S1, S2, Sn) with the main station is performed on a predetermined service frequency channel, **characterized in that**
- plural service frequency channels are preset in the main station (M) which are advantageously arranged as far apart as possible on the frequency band,
- the main station (M) checks the service frequency channels and selects the service frequency channel which is interfered the least;
- the main station (M) transmits on the selected service frequency channel to all substations; and
- substations (S1, S2, Sn) search for the selected service frequency channel by changing their set frequency.

5. The method according to the preceding claim,
**characterized in that**
the registration signal is transmitted until all substations (S1, S2, Sn) have registered with the main station (M).

6. The method according to claim 4 or 5,
**characterized in that**
a registration of the sub stations (S1, S2, Sn) with the main station (M) is performed on the service frequency channel selected by the main station (M).

7. The method according to the preceding claim,
**characterized in that**
the main station (M) communicates at least one frequency range to the substations (S1, S2, Sn) which frequency range is determined by the main station during the registration, wherein the frequency range is used for communications in the normal operating mode and communicates a point in time when a switch to the at least one frequency range is performed.

8. The method according to one of the preceding claims,
**characterized in that**
- during normal operating mode a communication is performed between the main station (M) and the substations (S1, S2, Sn) in at least two frequency ranges on at least one respective base channel,
- in the first and/or second interfered base channel the main station (M) and the respective substation (S1, S2, Sn) switches to another channel within the respective frequency range, and
- advantageously an additional frequency channel change is performed overall advantageously up to 5 or 7 times if the interference still occurs after the change.

9. The method according to claim 8,
**characterized in that**
- after a predetermined number of frequency channel changes a broad band and background scan is performed in which the frequency spectrum is scanned in broadband for a new uninterfered frequency range, wherein meanwhile a communication between the main station (M) and the substations (S1, S2, Sn) is performed in the non interfered first or second frequency range; and
- after determining a new frequency range a switch to this new frequency range is performed.

10. The method according to the preceding claim,
**characterized in that**
- the main station (M) includes at least two transceivers;
- the broadband background scan is performed with the transceiver which has been used in the interfered frequency range, and
- until a communication with the substations (S1, S2, Sn) is performed at least through the transceiver which is used in the uninterfered frequency range.

11. The method according to claim9 or 10,
**characterized in that**
the broadband background scan is performed over a time period, advantageously of at least 2 hours, better more than 20 hours, best over several days during which statistical data like e.g. frequency, type and number of interferences are collected and the data is processed thereafter for determining a new, possibly uninterfered frequency range.

12. The method according to one of the preceding claims,
**characterized in that**
- before an initial switch on of all main stations, the frequency channels are determined in which the security system operates thereafter, and
- subsequently advantageously before installing the security system the registration of the substation (S1, S2, Sn) and of the at least one main station (M1, M2, Mn) is performed, wherein during the registration the determined frequency channels are set in the substations and in the at least one main station (M1, M2, Mn)

13. The method according to one of the preceding claims,
**characterized in that**
the substations (S1, S2, Sn) are in sleep mode before being installed, wherein they periodically wake up from the sleep mode for a short time period and search for a wake up signal of the main station (M1, M2, Mn), advantageously the registration signal of the main station (M1, M2, Mn).

14. A security system for radio transmission of sensor data wherein the security system is part of a superordinate central security system and which includes a main station (M) and one or plural associated substations (S1, S2, Sn) that are radio connected with the main station (M), wherein sensor data and addresses identifying the substations (S1, S2, Sn) are transmitted to the main station (M), wherein the security system is configured for performing a method according to one of the preceding claims.

15. A central security system, comprising
- a superordinate central like e.g. a fire reporting central (BMZ) and
- at least one security system according to the preceding claim wherein the main station (M) of the security system is connected with the superordinate central, advantageously through a serial interface.

## Revendications

1. Procédé pour installer une installation d'avertissement de danger, comportant au moins une station principale (M1) et une ou plusieurs stations auxiliaires (S1, S2, Sn), une communication s'effectuant au moyen d'une transmission radio entre une station principale (M1) et des stations auxiliaires (S1, S2, Sn) associées à celle-ci et la communication étant effectuée dans au moins une certaine plage de fréquences,
**caractérisé en ce que**
a) plusieurs stations principales (M1, M2, Mn) sont présentes,
b) après mise en service, une première station principale (M1) émet un signal de présence vers toutes les autres stations principales (M2 à Mn),
c) la première station principale (M1) refuse le mode d'annonce jusqu'à ce que plus aucune autre station principale (M2 à Mn) ne signale le mode d'annonce,
d) la première station principale (M1) occupe au moins une plage de fréquences qui est encore libre et non perturbée et
e) la première station principale (M1) passe dans le mode d'annonce.

2. Procédé selon la revendication 1, **caractérisé en ce que** le signal de présence demande aux autres stations principales (M2 à Mn) d'indiquer
- si elles se trouvent dans le mode d'annonce dans lequel les stations auxiliaires (S1, S2, Sn) sont annoncées auprès de la station principale (M2 à Mn) et/ou
- si elles se trouvent dans le mode de fonctionnement normal et quelle plage de fréquences les stations principales (M2 à Mn) se trouvant dans le mode de fonctionnement normal ont occupée pour la communication.

3. Procédé selon la revendication 1 ou 2,
**caractérisé en ce que**
- la première station principale (M1) communique le mode d'annonce avec un signal de mode d'annonce à toutes les autres stations principales (M2 à Mn) et/ou
- la station principale (M1) détermine l'au moins une plage de fréquences à occuper par elle-même en évaluant des informations obtenues des autres stations principales (M2 à Mn) et concernant les plages de fréquences occupées.

4. Procédé pour installer un système avertisseur de danger, qui fait partie d'une installation d'avertissement de danger centrale supérieure et qui comporte une station principale (M) et plusieurs stations auxiliaires (S1, S2, Sn) entre lesquelles une communication s'effectue au moyen d'une transmission radio, selon la revendication 1 ou 2,
la communication entre les stations auxiliaires (S1, S2, Sn) et la station principale (M) en vue de l'annonce des stations auxiliaires (S1, S2, Sn) à la station principale (M) étant effectuée sur un canal de fréquences de service prédéterminé,
**caractérisé en ce que**
- plusieurs canaux de fréquence de service sont préréglés dans la station principale (M), lesquels sont de préférence le plus éloigné possible les uns des autres sur la bande de fréquence ;
- la station principale (M) vérifie les canaux de fréquence de service et sélectionne le canal de fréquence de service qui est le moins perturbé ;
- la station principale (M) émet un signal d'annonce sur le canal de fréquence de service sélectionné vers toutes les stations auxiliaires ; et
- les stations auxiliaires (S1, S2, Sn) cherchent le canal de fréquence de service sélectionné en modifiant leur fréquence réglée.

5. Procédé selon la revendication précédente,
**caractérisé en ce que**
le signal d'annonce est émis jusqu'à ce que toutes les stations auxiliaires (S1, S2, Sn) se soient annoncées auprès de la station principale (M).

6. Procédé selon la revendication 4 ou 5,
**caractérisé en ce qu'**
une annonce des stations auxiliaires (S1, S2, Sn) à la station principale (M) est effectuée sur le canal de fréquence de service sélectionné par la station principale (M).

7. Procédé selon la revendication précédente, **caractérisé en ce que**, lors de l'annonce, la station principale (M) communique aux stations auxiliaires (S1, S2, Sn) au moins une plage de fréquences qui est déterminée par elle-même et qui est utilisée pour la communication dans le mode de fonctionnement normal et un instant auquel un basculement sur l'au moins une plage de fréquences s'effectue.

8. Procédé selon l'une des revendications précédentes,
**caractérisé en ce que**
- dans le mode de fonctionnement normal, une communication entre la station principale (M) et les stations auxiliaires (S1, S2, Sn) s'effectue dans au moins deux plages de fréquences sur un canal de base à chaque fois,
- en présence d'un premier et/ou deuxième canal de base perturbé, la station principale (M) et la station auxiliaire (S1, S2, Sn) respective basculent sur un autre canal à l'intérieur de la plage de fréquences correspondante, et
- de préférence, un autre basculement de canal de fréquence s'effectue, au total de préférence jusqu'à cinq ou sept fois, si la perturbation apparaît encore après le basculement.

9. Procédé selon la revendication 8,
**caractérisé en ce que**
- après un nombre prédéterminé de basculements de canal de fréquence, un balayage d'arrière-plan à large bande est effectué, balayage lors duquel le spectre de fréquence est examiné en large bande à la recherche d'une nouvelle plage de fréquences non perturbée et pendant lequel une communication entre la station principale (M) et les stations auxiliaires (S1, S2, Sn) continue à s'effectuer dans la première ou deuxième plage de fréquences non perturbée ; et
- après détermination d'une nouvelle plage de fréquences, un basculement sur celle-ci est effectué.

10. Procédé selon la revendication précédente,
**caractérisé en ce que**
- la station principale (M) comporte au moins deux émetteurs-récepteurs ;
- effectue le balayage d'arrière-plan à large bande avec l'émetteur-récepteur qui a été utilisé dans la plage de fréquences perturbée, et
- jusqu'à ce qu'une communication avec les stations auxiliaires (S1, S2, Sn) s'effectue au moins par l'intermédiaire de l'émetteur-récepteur qui est utilisé dans la plage de fréquences non perturbée.

11. Procédé selon la revendication 9 ou 10, **caractérisé en ce que**
- le balayage d'arrière-plan à large bande est effectué dans un intervalle de temps, de préférence d'au moins 2 heures, mieux de plus de 20 heures et encore mieux de plusieurs jours, dans lequel des données statistiques, par exemple la fréquence, le type et le nombre de perturbations, sont collectées et ces données sont ensuite évaluées pour déterminer une nouvelle plage de fréquences, le plus possible non perturbée.

12. Procédé selon l'une des revendications précédentes,
**caractérisé en ce que**
- avant la première mise en service de toutes les stations principales, on détermine les canaux de fréquence dans lesquels travaillera ensuite l'installation d'avertissement de danger, et
- ensuite, de préférence avant la mise en place de l'installation d'avertissement de danger, l'annonce de la station auxiliaire (S1, S2, Sn) et de l'au moins une station principale (M1, M2, Mn) est effectuée, les canaux de fréquence déterminés étant réglés dans les stations auxiliaires et dans l'au moins une station principale (M1, M2, Mn) lors de l'annonce.

13. Procédé selon l'une des revendications précédentes,
**caractérisé en ce que**,
avant leur installation, les stations auxiliaires (S1, S2, Sn) se trouvent dans un mode de sommeil lors duquel elles se réveillent périodiquement pour un court moment et cherchent un signal de réveil de la station principale (M1, M2, Mn), de préférence le signal d'annonce de la station principale (M1, M2, Mn).

14. Système avertisseur de danger pour la transmission radio de données d'avertissement, qui peut faire partie d'une installation d'avertissement de danger centrale supérieure et qui comporte une station principale (M) et une ou plusieurs stations auxiliaires (S1, S2, Sn) qui sont associées à celle-ci et qui sont reliées par radio à la station principale (M), des données d'avertissement ainsi que des adresses qui identifient les stations auxiliaires (S1, S2, Sn) étant transmises à la station principale (M),
conçu pour la mise en oeuvre d'un procédé selon l'une des revendications précédentes 4 à 13.

15. Installation d'avertissement de danger centrale
- comportant une centrale supérieure, telle qu'une centrale d'avertissement d'incendie (BMZ), et
- au moins un système avertisseur de danger selon la revendication précédente, dont la station principale (M) est reliée à la centrale supérieure, de préférence par l'intermédiaire d'une interface série.
